(19) Europäisches Patentamt
European Patent Office
Office européen des brevets

(11)　**EP 3 498 363 B1**

(12)　**EUROPEAN PATENT SPECIFICATION**

(45) Date of publication and mention
of the grant of the patent:
**28.10.2020 Bulletin 2020/44**

(51) Int Cl.:
*B01D 69/08* *(2006.01)*　　*B01D 63/02* *(2006.01)*
*B01D 69/02* *(2006.01)*　　*D04C 3/48* *(2006.01)*
*D04C 1/06* *(2006.01)*　　*D06C 7/00* *(2006.01)*
*C02F 1/44* *(2006.01)*

(21) Application number: **17839692.5**

(22) Date of filing: **25.07.2017**

(86) International application number:
**PCT/KR2017/007994**

(87) International publication number:
**WO 2018/030674 (15.02.2018 Gazette 2018/07)**

(54) **APPARATUS HAVING TEMPERATURE CONTROL STRUCTURE FOR HEAT TREATMENT OF INNER SURFACE OF BRAID FOR REINFORCING HOLLOW FIBER MEMBRANE FOR WATER TREATMENT**

VORRICHTUNG MIT EINER TEMPERATURKONTROLLSTRUKTUR ZUR WÄRMEBEHANDLUNG DER INNEREN OBERFLÄCHE EINES GEFLECHTS ZUR VERSTÄRKUNG EINER HOHLFASERMEMBRAN ZUR WASSERBEHANDLUNG

APPAREIL AYANT UNE STRUCTURE DE RÉGULATION DE TEMPÉRATURE POUR LE TRAITEMENT THERMIQUE DE LA SURFACE INTERNE D'UNE TRESSE POUR RENFORCER UNE MEMBRANE À FIBRES CREUSES POUR LE TRAITEMENT D'EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.08.2016 KR 20160102122**

(43) Date of publication of application:
**19.06.2019 Bulletin 2019/25**

(73) Proprietor: **Kim, Im Sun**
**Hapcheon-gun, Gyeongsangnam-do 50245 (KR)**

(72) Inventor: **Kim, Im Sun**
**Hapcheon-gun, Gyeongsangnam-do 50245 (KR)**

(74) Representative: **M. Zardi & Co S.A.**
**Via G. B. Pioda, 6**
**6900 Lugano (CH)**

(56) References cited:
　　CN-U- 203 144 664　　JP-A- H1 089 550
　　KR-A- 20100 113 322　　KR-B1- 101 634 050
　　KR-B1- 101 634 050　　KR-Y1- 200 441 974
　　US-A- 2 541 728　　US-A- 6 077 376

## Description

[Technical Field]

The present invention relates to a device for heat-treating an inner surface of a braid for reinforcing a hollow fiber membrane for water treatment, and more particularly, to a device for heat-treating an inner surface of a braid for reinforcing a hollow fiber membrane for water treatment with a temperature control structure, in which, by enlarging the inner diameter of the braid while increasing a density of a fiber texture forming the inner surface of the braid due to a heating core having a uniformly maintained temperature, improving a roundness of inner and outer diameters, and increasing a pressure resistant strength, it is possible to obtain effects of improving physical properties of a hollow fiber enforcement membrane as well as enhancing filtration reliability and water permeability, and increasing a service life and reducing economic costs.

[Background Art]

In general, a braid is made in such a manner that a plurality of knitted yarns (filament yarns or drawing textured yarns) are woven and shaped. Typically, the braid is used in various applications such as an electric wire, hose, binding string, and the like, and is used in various fields such as a water treatment filtration field and the like.

Meanwhile, a filtration method, which is implemented using a hollow fiber membrane applied to a water treatment field, is widely used in filtration fields such as industrial wastewater treatment, sewage and waste treatment, and high purity water purification for a water supply. In recent years, the application thereof is expanding in various fields such as a pretreatment of an RO system, a bacteria free water preparation system for pretreatment or medicine, a fish farm, a leisure facility and the like.

However, the typical hollow fiber membrane has a disadvantage in that, due to a low tensile strength and pressure resistant strength thereof, the membrane may be easily broken by an external impact, or filtration reliability and water permeability may be significantly deteriorated due to various impurities or sludges which are adhered to a surface of the membrane when using for a long period of time.

In order to resolve the above-described problems, a hollow fiber reinforcement membrane, in which a membrane thin film is coated on the surface of the braid while employing a braid weaved in a tube shape using the filament yarns or drawing textured yarns as a reinforcing material, such that a mechanical strength (tensile strength and pressure resistant strength) may be increased to extend a service life of the hollow fiber membrane, and the filtration reliability and water permeability may be enhanced, has been developed and used in the art.

However, the above-described braid for reinforcing a hollow fiber membrane has a disadvantage that, when the braid weaved using the filament yarn is used for reinforcing the hollow fiber membrane, an inner diameter of the braid is increased, whereas a peel-off strength of the membrane film is decreased, such that the membrane may be easily peeled-off, and the service life of the hollow fiber membrane may be shortened, as well as the filtration reliability may be deteriorated. When the braid weaved using the drawing textured yarns is used for reinforcing the hollow fiber membrane, an adhesiveness with the surface of the braid for the membrane film is increased, thereby resulting in an increase in the peel-off strength and the service life of the membrane, and an enhancement in the filtration reliability, whereas the inner diameter thereof is decreased, such that the water permeability is significantly deteriorated.

Moreover, when knitting the braid for reinforcing a hollow membrane fiber using the filament yarns or drawing textured yarns, the size of the inner diameter of the braid and the roundness of the inner and outer diameters are key factors to determine the water permeability, the filtration reliability and the service life of the hollow fiber reinforcement membrane. Therefore, in order to enlarge the inner diameter of the braid and improve the roundness, a method, in which a high carbon steel wire, known as piano wire, having a diameter of 0.8 to 2.0 mm, which may vary depending on a material of the knitted yarn and the number of carriers of a braiding machine, is positioned at an inner center of the knitted yarns, and the length of a portion surrounded by the knitted yarns is set to be about 5 to 10 mm, then the knitted yarns are woven around the portion thus to manufacture a braid, has been used.

However, when the knitted yarns are woven around the steel wire, the inner diameter of the braid is greatly enlarged, but if they are woven out of the steel wire, the knitted yarns are immediately contracted due to the elasticity and tensile strength thereof. Further, the knitted yarns are easily deformed during passing through a drawing device and during loading of the braid, whereby it is hard to maintain a circular shape thereof.

In addition, contraction and deformation of the membrane film may occur during coating thereof, and before or after heat treatment. Therefore, effects of enlarging the inner diameter of the braid and improving the roundness of the inner and outer diameters may be expected in some degree, but such effects are insignificant.

In order to solve the above-described problems, the applicant of the present invention has proposed an apparatus for heat treating an inner surface of a braid for reinforcing a hollow fiber membrane for water treatment and a braid for reinforcing a hollow fiber membrane for water treatment manufactured by using the heat treatment apparatus as disclosed in Korean Patent Registration No. 10-1634050, thereby solving the above problems.

However, in the above-described heat treatment apparatus, since a voltage is not constant depending on seasonal factors or time zones, a variation in the temperature of the heater is large and unstable, and in particular, even when the same type and the same capacity of heaters are used, a resistance value of each heater is not completely equal to each other and there is an error depending on working conditions such as heating characteristics of a heating cable, ceramic, a high frequency heater. Therefore, the heating temperatures of the heaters are different from each other, such that the temperature of the heating core is varied within about 5 to 20 degrees Celsius, and the temperature of the heating core is not constant. Thereby, it is difficult to uniformly control the temperature of the heating core as a whole in a mass production system in which a plurality of knitting machines are installed and operated at the same time. As a result, the physical properties of the manufactured braid, i.e., the sizes and roundness of the inner and outer diameters, the pressure resistant strength, and the like are different from each other depending on the machine, and thereby uniform product quality cannot be obtained.

Further, since a clamping nut is in direct contact with the heating core, the contact area is large and, the heat of the heating core is transmitted to the clamping nut as it is. Therefore, a large amount of heat loss is generated by heating the clamping nut, and there is a risk that an operator will be burned at the time of an operation such as the replacement of the knitted yarn.

[Prior Art Document]

[Patent document]

    1. Korean Utility Model Registration No. 20-0311089
    2. Korean Utility Model Registration No. 20-0193461
    3. Korean Patent Registration No. 10-1634050

[Summary of Invention]

[Problems to be Solved by Invention]

In consideration of the above-mentioned circumstances, it is an object of the present invention to provide a device for heat-treating an inner surface of a braid for reinforcing a hollow fiber membrane for water treatment with a temperature control structure, in which a heating core allows to uniformly maintain a heat-generating temperature by preventing the temperature of the heating core from being affected by instability of a voltage due to seasonal factors or time zones and working conditions such as heating characteristics, for example, a heating cable, ceramic, and a high frequency heater, and by enlarging the inner diameter of the braid while increasing a density of a fiber texture forming the inner surface of the braid, improving a roundness of inner and outer diameters, and increasing a pressure resistant strength, it is possible to obtain effects of improving physical properties of a hollow fiber enforcement membrane as well as enhancing filtration reliability and water permeability, and increasing a service life and reducing economic costs.

In addition, another object of the present invention is to provide a device for heat-treating an inner surface of a braid for reinforcing a hollow fiber membrane for water treatment with a temperature control structure, which may obtain an improvement in thermal efficiency by preventing heat of a heating core from being lost to an outside.

Further, another object of the present invention is to provide a device for heat-treating an inner surface of a braid for reinforcing a hollow fiber membrane for water treatment with a temperature control structure, which may prevent a clamping nut from being heated by preventing transmission of heat to the clamping nut, and thereby protecting workers from a safety accident such as burns at the time of an operation such as a replacement of the knitted yarn.

[Means for Solving Problems]

To achieve the above objects, there is provided a device for heat-treating an inner surface of a braid during braiding for reinforcing a hollow fiber membrane for water treatment with a temperature control structure, the device including: a heating core which includes a heating part having a reduced diameter at an upper end or at a middle portion thereof and an engaging part formed at a lower end portion thereof, and is made of a material of copper or a copper alloy; a heater coupled to the heating core to heat the same and receive a power through a heater electric wire coated with a braid; a temperature sensor which vertically passes through a center of the heater in a first direction, and comes into contact with an inner lower end of the heating core by an upper end thereof; a cylindrical housing through which the heater electric wire and the sensor electric wire pass in the first direction, and includes a male screw part formed on an upper outer circumference thereof, and an insulator mount groove formed in an upper inner portion thereof; a cylindrical heat shield tube extending in the first direction which includes a core engaging jaw bent inward at an upper end thereof to surround the heating core and to be engaged to an upper portion of the engaging part, and an engaging flange made of stainless steel, which is formed at a lower end thereof and is pent outward to connect the heating core and the housing with the two being spaced apart from each other;
characterized by further comprising: a clamping nut which has a shape whose inside is penetrated in the first direction, covers the lower end of the heat shield tube and the upper end of the housing, and includes a shield tube engaging jaw formed at an upper end thereof to be engaged to the engaging flange of the heat shield tube, and a female screw part formed on a lower inner circumference thereof to be screwed with the male screw part of the housing, thereby connecting and fixing the heat shield tube coupled with the heating core and the housing with each other; a mounting board which includes a housing fixing part formed at a center thereof in a cylindrical shape, into which a lower portion of the housing is inserted and fixed, and a bracket designed to mount the device on a braiding machine such that the braiding yarns are braided on the outer circumference of the heating core, with the bracket protruding from both sides of the housing fixing part in a direction perpendicular to the first direction; and a temperature controller which receives the power from an outside, is connected with the heater and the temperature sensor through the heater electric wire and the sensor electric wire, and is configured to set a target temperature of the heating core, receive a temperature signal of the heating core detected by the temperature sensor, and supply or shout off the power to the heater in order to uniformly maintain the temperature of the heating core, so as to control an operation of turning on or turning off the heater and a voltage to be supplied to the heater.

[Advantageous Effects]

According to the device for heat-treating an inner surface of a braid for reinforcing a hollow fiber membrane for water treatment with a temperature control structure of present invention, since the temperature sensor comes into contact with the inside of the heating core, and the device includes the controller capable of supplying or shutting off a power depending on a measurement value of the temperature sensor, the temperature of the heating core is uniformly controlled without affecting by instability of a voltage due to seasonal factors or time zones and working conditions such as heating characteristics, for example, a heating cable, ceramic, and a high frequency heater, and by enlarging the inner diameter of the braid while increasing a density of a fiber texture forming the inner surface of the braid, improving a roundness of inner and outer diameters, and increasing a pressure resistant strength, it is possible to obtain effects of improving physical properties of a hollow fiber enforcement membrane as well as enhancing filtration reliability and water permeability, and increasing a service life and reducing economic costs.

In addition, since the thin and long pipe-shaped heat shield tube made of stainless steel with the lowest thermal conductivity among ferrous metals is provided between the heating core and the clamping nut, it is possible to prevent the heat of the heating core from being lost through the clamping nut, and further improve thermal efficiency.

Further, by preventing the heat of the heating core from being transmitted to the clamping nut due to the heat shield tube, it is possible to protect a worker from a safety accident such as burns at the time of an operation such as a replacement of the knitted yarn.

[Brief Description of Drawings]

FIG. 1 is an exploded perspective view of a device for heat-treating an inner surface of a braid for reinforcing a hollow fiber membrane for water treatment with a temperature control structure according to the present invention.

FIG. 2 is an assembled perspective view of the device for heat-treating an inner surface of a braid for reinforcing a hollow fiber membrane for water treatment with a temperature control structure according to the present invention.

FIG. 3 is a cross-sectional view of the device for heat-treating an inner surface of a braid for reinforcing a hollow fiber membrane for water treatment with a temperature control structure according to the present invention.

FIG. 4 is a cross-sectional view of a device for heat-treating an inner surface of a braid for reinforcing a hollow fiber membrane for water treatment with a temperature control structure according to another embodiment of the present invention.

FIG. 5 is a view illustrating a state of heat-treating the inner surface of the braid during braiding by using the device for heat-treating an inner surface of a braid for reinforcing a hollow fiber membrane for water treatment with a temperature control structure according to the present invention.

FIG. 6 is a cross-sectional view of a braid manufactured by using the device for heat-treating an inner surface of a braid for reinforcing a hollow fiber membrane for water treatment with a temperature control structure according to the present invention

FIG. 7 is photographs illustrating actual products for comparing a braid manufactured by the device for heat-treating an inner surface of a braid for reinforcing a hollow fiber membrane for water treatment with a temperature control structure according to the present invention with a braid manufactured by a conventional method.

FIG. 8 is views for comparing braid manufactured by the device for heat-treating an inner surface of a braid for reinforcing a hollow fiber membrane for water treatment with a temperature control structure according to the present invention with the braid manufactured by the conventional method.

[Mode for Carrying out Invention]

Terms or words used in the specification and claims should not be construed as limited to a conventional or lexical meaning, and should be understood as appropriate notions by the inventor based on that he/she is able to define terms to describe his/her invention in the best way to be seen by others.

Therefore, embodiments and drawings described herein are the most preferable embodiment of the present invention and not exhaustive in terms of the technical idea of the present invention, and it will be understood that various modifications and equivalents may be made to take the place of the embodiments at the application point of the present invention.

Hereinafter, preferable embodiments of the present invention will be described with reference to the accompanying drawings.

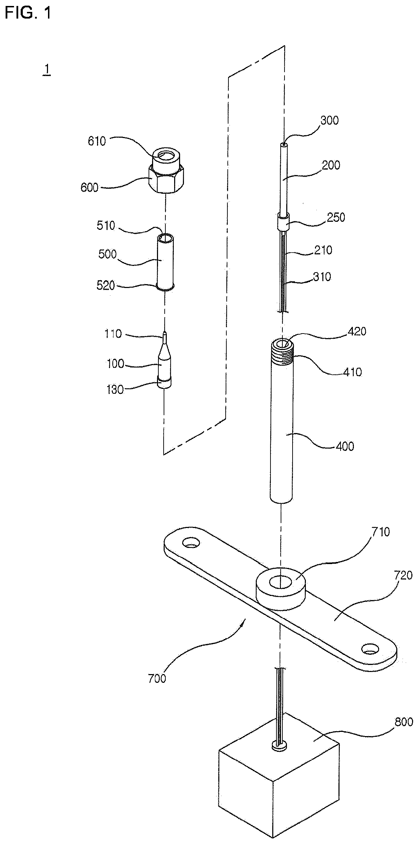

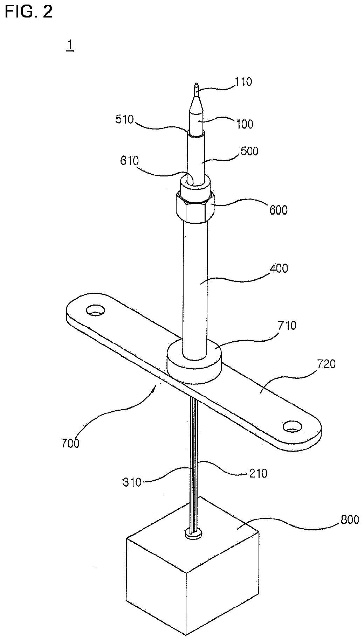

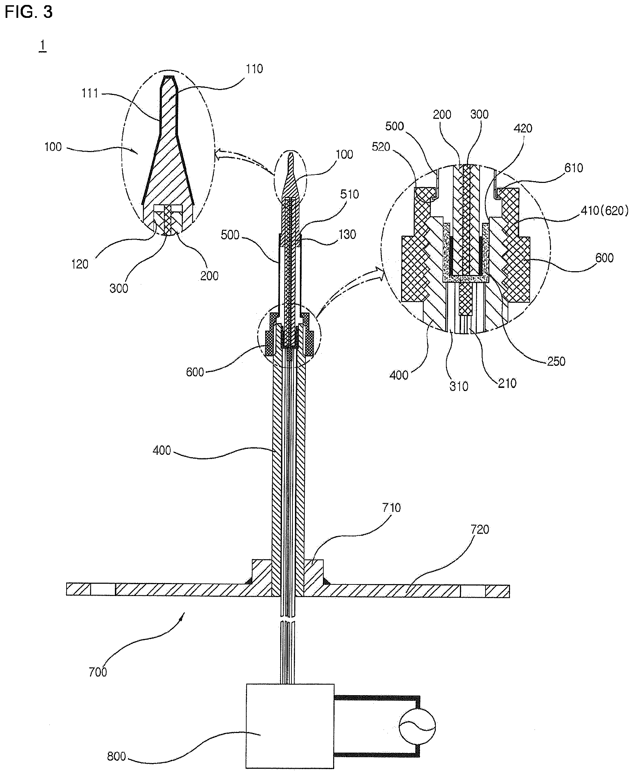

FIG. 1 is an exploded perspective view of a device for heat-treating an inner surface of a braid for reinforcing a hollow fiber membrane for water treatment with a temperature control structure according to the present invention, FIG. 2 is an assembled perspective view of the device for heat-treating an inner surface of a braid for reinforcing a hollow fiber membrane for water treatment with a temperature control structure according to the present invention, and FIG. 3 is a cross-sectional view of the device for heat-treating an inner surface of a braid for reinforcing a hollow fiber membrane for water treatment with a temperature control structure according to the present invention.

As illustrated in FIGS. 1 to 3, a device 1 for heat-treating an inner surface of a braid for reinforcing a hollow fiber membrane for water treatment (hereinafter, also briefly referred to as a "heat treatment device") according to the present invention includes a heating core 100, a heater 200, a temperature sensor 300, a housing 400, a heat shield tube 500, a clamping nut 600, a mounting board 700, and a temperature controller 800.

Herein, the heating core 100 is configured to apply heat to the inner surface of the braid during braiding the braid in a braiding machine (not illustrated in the drawings), and may be made of a material of copper (Cu) or a copper alloy having a higher thermal conductivity than silver (Ag).

In this case, the heating core 100 is formed in a form of a vertical bar, and includes a heating part 110 having a reduced diameter formed at an upper end thereof, so as to substantially apply heat to the braid through the heating part 110. It is most preferable that the heating part 110 has a diameter of 0.5 to 30 mm and a length of 5.0 to 30 mm.

The heating core 100 includes a heater coupling groove 120 formed therein in a shape whose lower end is open, into which a heater 200 is inserted and coupled as described below, and an engaging part 130 having an enlarged diameter formed around the lower end thereof.

Meanwhile, the heating part 110 of the heating core 100 has a chromium plated layer 111 on a surface thereof so as to provide a smooth surface roughness so that the braid may be smoothly removed during braiding the braid.

The heater 200 is connected to the heating core 100 in such a manner that an upper end thereof is inserted into the heater coupling groove 120 from the lower portion of the heater core 100, and in the embodiment of the present invention, may be formed in a vertically long cylindrical shape of which lower end portion extends downward and is enclosed by an insulator 250.

In addition, the heater 200 is connected with a heater electric wire 210 coated with a braid, and receives a power through the heater electric wire 210 to generate heat. The heater electric wire 210 passes through the insulator 250 to be drawn out to an outside.

That is, the heater 200 generates heat, and the generated heat is transmitted to the heating core 100, then the heat transmitted to the heating core 100 is applied to the braid through the heating part 110.

The temperature sensor 300 is used for detecting a heating temperature of the heating core 100 and is formed in a "rod" shape, wherein an upper end thereof vertically passes through a center of the heater 200 to come into contact with the heater coupling groove 120 which is the nearest surface to the heating part 110, and a lower end thereof passes through the insulator 250 and is connected to the sensor electric wire 310 then drawn out to the outside.

The housing 100 is formed in a cylindrical shape whose inside is vertically penetrated, so that the heater electric wire 210 and the sensor electric wire 310 pass therethrough to protect the heater electric wire 210 and the sensor electric wire 310, and includes an insulator mount groove 420 formed in an upper inner portion thereof, into which another insulator 250 that encloses the lower end of the heater 200 is inserted and mounted.

In addition, the housing 400 has a male screw part 410 formed on the upper outer circumference thereof.

The heat shield tube 500 is formed in a cylindrical body having a vertical length, and is made of a stainless steel (SUS) material having the lowest thermal conductivity among the ferrous metals and excellent in mechanical strength and mechanical workability.

In this case, the heat shield tube 500 includes a core engaging jaw 510 bent inward at an upper end thereof. The heating core 100 is inserted from the lower portion of the heat shield tube 500, and the upper portion of the engaging part 130 is engaged to the core engaging jaw 510.

In addition, the heat shield tube 500 has an engaging flange 520 formed at a lower end thereof with being bent outward to be coupled with the clamping nut 600 to be described below, and allows the heating core 100 to be connected and fixed to the clamping nut 600 with being radially spaced apart from the housing 400 and the clamping nut 600.

Meanwhile, the heater 200 is inserted into the heat shield tube 500, and the lower end thereof protrudes below the heat shield tube 500.

The clamping nut 600 is configured to apply a connection force between the heating core 100 and the housing 400, and has a shape whose inside is vertically penetrated.

In this case, the clamping nut 600 includes a shield tube engaging jaw 610 formed at an upper end thereof with protruding inward, so that the upper end of the engaging flange 520 of the heat shield tube 500 is engaged thereto, and a female screw part 620 formed on a lower inner circumference thereof so that the male screw part 410 of the housing 400 is screwed thereto.

That is, the clamping nut 600 is inserted on the heat shield tube 500 from the above to cover the lower end of the heat shield tube 500 and the upper end of the housing 400, and is coupled to the housing 400 by the female screw part 620 screwed with the male screw part 410 thereof, so as to press and fix the heat shield tube 500 by the shield tube engaging jaw 610 engaged to the upper surface of the engaging flange 520 thereof during being screwed therewith.

In this case, the clamping nut 600 is longitudinally spaced apart from the heating core 100 through the heat shield tube 500 similar to the housing 400, and allows the heat shield tube 500 and the heating core 100 to be connected and fixed with each other.

The mounting board 700 is adapted to mount the heat treatment device 1 according to the present invention on the braiding machine (not illustrated), and includes a housing fixing part 710 formed at the center thereof in a cylindrical shape, into which a lower portion of the housing 100 is inserted and fixed, and a bracket 720 which protrudes from both sides of the housing fixing part 710 to mount the device on the braiding machine through the housing fixing part 710.

In this case, a shape of the bracket 720 is not particularly limited and may have various shapes according to the type and shape of the braiding machine, and it is preferable that the bracket is installed at the upper end of the braiding machine.

The heater controller 800 is configured to control an operation of the heater 200 with being applied with a power from the outside, and is installed outside the housing 400 to be connected with the heater electric wire 210 and the sensor electric wire 310 which are drawn out through the housing 400 and the housing fixing part 710.

The temperature controller 800 is configured to set a target temperature of the heating core 100 depending on the heat generated by the heater 200 and adjust the voltage to be supplied to the heater 200. The temperature sensor 800 receives a temperature signal of the heating core 100 detected by the temperature sensor 300 and controls to supply or shout off the power to the heater 200 based on the set temperature, such that it is possible to control an operation of turning on or turning off the heater 200 and adjust the voltage to be supplied to the heater 200.

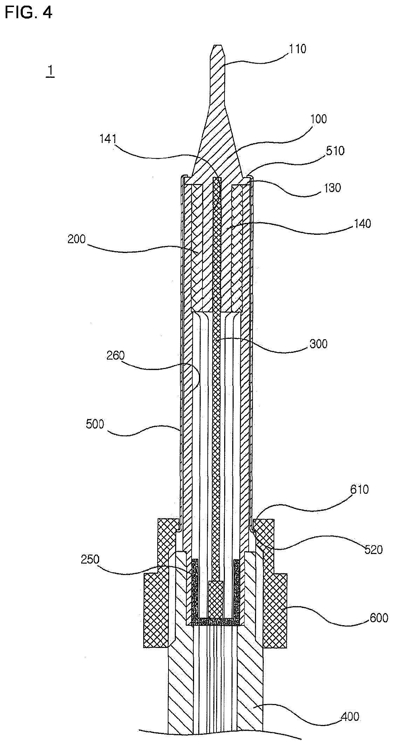

Meanwhile, the device 1 for heat-treating an inner surface of a braid for reinforcing a hollow fiber membrane for water treatment with a temperature control structure according to the present invention may have a configuration including a heating core 100, a heater 200, and a temperature sensor 300 according to another embodiment of the present invention, as illustrated in FIG. 4.

For this purpose, the heating core 100 includes an engaging part 130 formed at a middle portion thereof, and an extension part 140 which has a reduced diameter and extends downward from the engaging part 130, wherein the extension part 140 has a sensor insertion groove 141 whose lower end is open.

In addition, the heater 200 may be formed in a short cylindrical shape that surrounds the lower extension part 140 of the heating core 100.

In addition, the insulation tube 260 surrounds the heater 200, wherein the upper portion of the insulation tube 260 surrounds the heater 200 and the lower portion thereof passes through the heat shield tube 500 protrudes downward. The lower end of the insulation tube 260 is enclosed by the insulator 250. The heater electric wire 210 passes through the insulator 250 and is connected to the temperature controller 800.

In this case, the insulation tube 260 and the insulator 250 are inserted into the insulator mount groove 420 of the housing 400.

The temperature sensor 300 is formed in a "rod" shape, and the upper end thereof is inserted into the sensor insertion groove 141 of the heating core 100 and comes into contact with a portion which is the nearest surface to the heating part 110 of the heating core 100, and the lower end thereof is mounted in the insulator 250. The sensor electric wire 310 passes through the insulator 250 and is connected to the temperature controller 800.

In this case, the clamping nut 600 is inserted on the heat shield tube 500 from the above to cover the lower end of the heat shield tube 500 and the upper end of the housing 400, and is coupled to the housing 400 by the female screw part 620 screwed with the male screw part 410 thereof, so as to press and fix the heat shield tube 500 by the shield tube engaging jaw 610 engaged to the upper surface of the engaging flange 520 thereof during being screwed therewith. In this case, the clamping nut 600 is longitudinally spaced apart from the heating core 100 through the heat shield tube 500 similar to the housing 400.

Meanwhile, a type of the heater 200 is not particularly limited, and may employ any one of a typical ceramic, a heating cable, a high frequency or ultrasonic wave heater so long as it can generate a required heat.

Hereinafter, an operation of the device for heat-treating an inner surface of a braid for reinforcing a hollow fiber membrane for water treatment with a temperature control structure according to the present invention will be described in detail with reference to the accompanying drawings.

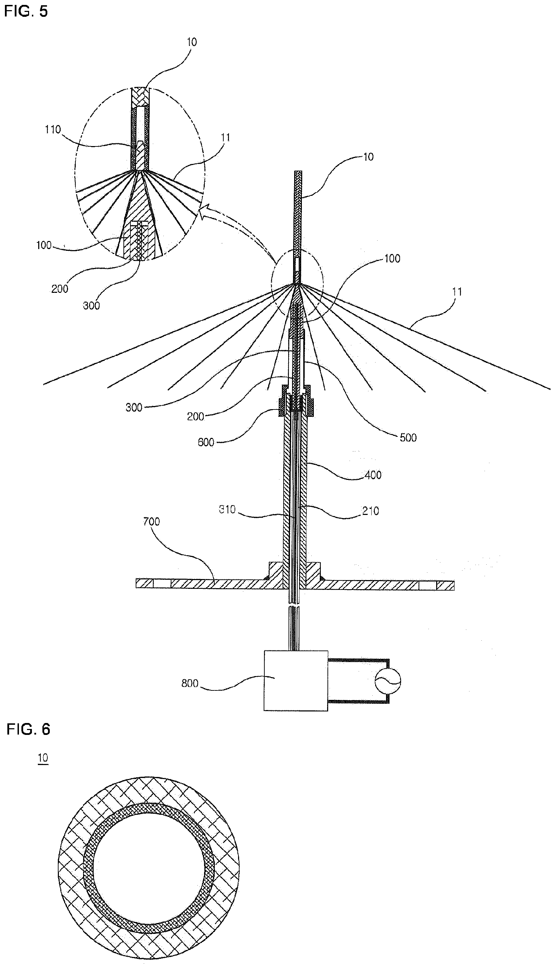

When manufacturing a braid by using the device 1 for heat-treating an inner surface of a braid for reinforcing a hollow fiber membrane for water treatment with a temperature control structure according to the present invention, during a braid is braided using knitted yarns 11 made of filament yarns or drawing textured yarns, as illustrated in FIG. 5, the knitted yarns 11 are braided on the outer circumference of the heating core 100. During braiding the braid, the heating core 100 applies heat to the knitted yarns and the inner surface of the braid, and the inner surface of the braid is melted by the heat to cause a contraction to a predetermined degree.

That is, when a power is applied from the temperature controller 800 to the heater 200 through the heater electric wire 210, heat is generated by the heater 200, and the generated heat is transmitted to the heating core 100 to heat the heating part 110. Then, the inner surface of the braid is melted by the heat of the heating part 110, such that a braid 10 having the heat treated inner surface may be obtained as illustrated in FIG. 6.

Meanwhile, in the present invention, when applying the heat by the heater 200 as described above, it is possible to maintain a uniform temperature of heat generated in the heating core 100 at all times, which may be achieved by the temperature sensor 300 and the temperature controller 800.

That is, an optimum heating temperature of the heating core 100 required in the hollow fiber reinforcing membrane is set in the temperature controller 800. During heating of the heating core 100, the temperature sensor 300 normally detects the temperature of the heating core 100, such that it is possible to control the heating core 100 to generate heat of a uniform heating temperature based on the detected temperature.

In detail, when the heating core 100 is heated by the heater 200, if the temperature of the heating core 100 rises excessively above the set temperature, the temperature sensor 300 transmits the detected temperature to the temperature controller 800, and the temperature controller 800 shuts off the power supplied to the heater 200, thereby decreasing the temperature of the heating core 100.

On the other hand, when the temperature of the heating core 100 drops below the set temperature due to the shutting off the power as described above, the temperature sensor 300 transmits the detected temperature to the temperature controller 800, and the temperature controller 800 increase the temperature of the heating core 100 based on the detected temperature.

In addition, when the temperature of the heating core 100 drops even though the power is supplied to the heater 200, the temperature controller 800 increases the voltage supplied to the heater 200 to raise the temperature of the heater 200 and the heating temperature of the heating core 100 according thereto.

That is, in the device 1 for heat-treating an inner surface of a braid for reinforcing a hollow fiber membrane for water treatment with a temperature control structure according to the present invention, it is possible to uniformly maintain the temperature of the heating core 100 in accordance with working conditions at all times. Therefore, it is easy to adjust the optimum temperature depending on the physical properties required in the hollow fiber reinforced membrane.

Further, the device 1 for heat-treating an inner surface of a braid for reinforcing a hollow fiber membrane for water treatment with a temperature control structure according to the present invention has a configuration in which the heating core 100 and the clamping nut 600, as well as the heater 200 and the clamping nut 600 are spaced apart from each other through the heat shield tube 500 made of stainless steel. Therefore, it is possible to prevent the heat of the heating core 100 and the heater 200 from being lost to the outside through the clamping nut 600, and thereby improving thermal efficiency

Herein, for example, thermal conduction will be described below.

The thermal conduction may be represented by the following equation.

$$P = Q/t = kA \ (TH-TC)/L$$

Wherein P represents thermal conduction,
$T_H$ represents a temperature of a high-temperature heat storage tank
$T_C$ represents a temperature of a low-temperature heat storage tank
A represents a contact area of a portion where heat is transmitted
L represents a thickness of conveyed plate (a length of pike)
Q represents an energy transmitted in a form of heat T represents a time at which heat is transmitted
K represents thermal conductivity

As can be seen from the above equation, the smaller the contact area A of the portion where the thermal conductivity k is low and the heat conduction occurs, and the longer the thickness L of the plate, the lower the thermal conductivity.

In order to prevent the heat of the heating core 100 from being transmitted to the clamping nut 600, the heat shield tube 500 made of a stainless steel having the lowest thermal conductivity in only a degree of 4% of copper and 22% of steel with a high mechanical strength is installed between the heating core 100 and the clamping nut 600, such that the contact area A with the heating core 100 is minimized and the heat transfer path L is increased. Therefore, it is possible to prevent the heat of the heating core 100 from being transmitted to the clamping nut 600, thereby further improving the thermal efficiency.

In addition, heat of the heating core 100 is prevented from being transmitted to the clamping nut 600 due to the heat shield tube 500, thereby preventing a safety accident such as burns at the time of an operation such as a replacement of the knitted yarn.

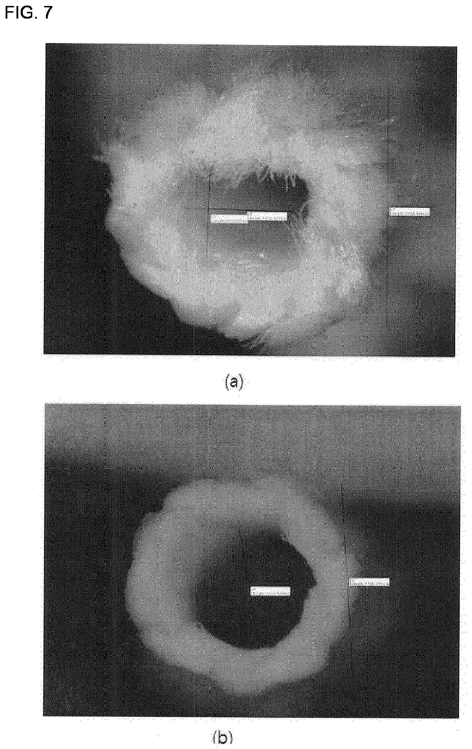

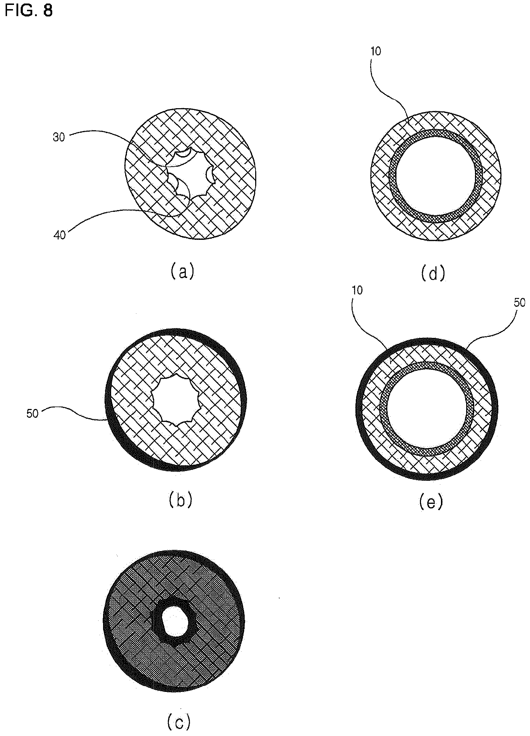

FIG. 7 is photographs illustrating actual products for comparing a braid manufactured by the device for heat-treating an inner surface of a braid for reinforcing a hollow fiber membrane for water treatment with a temperature control structure according to the present invention with a braid manufactured by a conventional method, and FIG. 8 is views for comparing braid manufactured by the device for heat-treating an inner surface of a braid for reinforcing a hollow fiber membrane for water treatment according to the present invention with the braid manufactured by the conventional method.

Referring to FIG. 8 together with FIG. 7(a) that illustrates the braid using the conventional steel wire core and FIG. 7(b) that illustrates the braid according to the present invention, it can be seen that the conventional braid, which is braided without using the braid inner surface heat treatment device 1 according to the present invention has a smaller inner diameter and has a lower roundness of the inner and outer diameters than the braid of the present invention due to the collapsed inner and outer surfaces. In particular, it exhibits that there are a plurality of loops 30 and mows 40 present on the inner surface of the braid.

In addition, as illustrated in FIG. 8(b), the braid has a membrane thin film 50 coated on the surface thereof with an irregular thickness.

Further, as illustrated in FIG. 8(c), the membrane liquid penetrates into the inner surface of the braid to narrow the inner diameter thereof.

On the other hand, the braid 10 formed using the heat treatment device 1 according to the present invention has a larger inner diameter, and an excellent roundness of the inner and outer diameters, in particular, there is no loop and mow at all while having uniform inner and outer surfaces.

In addition, as illustrated in FIG. 8(e), the braid has a membrane thin film 50 coated on the surface thereof with a regular thickness, and the inner surface texture of the braid 10 becomes dense.

That is, as described above, the braid 10 obtained as described above has an enlarged inner diameter to increase a flow rate of contaminated water when passing through the membrane film (not illustrated in the drawings), thereby resulting in an increase in purification efficiency of the contaminated water per a unit area of the membrane film. As a result, the water permeability may be improved to reduce costs required for manufacturing a contaminated water purification apparatus.

In addition, since the texture of the inner surface of the braid 10 becomes dense and the inner surface becomes strong, thereby increasing the pressure resistant strength. Therefore, when an external impact is applied to the braid or the braid is used for a long period of time, the membrane film is deformed and contracted due to an increase in the pressure at the time of passing through the membrane film, such that the water permeability of the membrane film is significantly reduced. In this case, since the pressure resistant strength is large, the deformation and contraction are prevented, thereby enhancing the water permeability and filtration reliability and increasing the service life of the hollow fiber enforcement membrane.

In addition, the roundness of the inner diameter of the braid 10 is increased and the inner surface is dense. Therefore, the roundness of the outer diameter of the braid is increased, and the circular shape of the braid is rarely deformed due to the external force such as the pressure of a membrane liquid at the time of coating the membrane, as well as during passing through the braiding device (not illustrated in the drawings) and during loading the braid 10. Therefore, eccentricity of the braid at the time of coating the membrane thin film may be minimized to manufacture a thin film having a uniform thickness, and thereby improving the physical properties of the film and enhancing the water permeability and filtration reliability.

In addition, the texture of the inner surface of the braid 10 is dense and the texture of the outer surface is looser and softer than the inner surface, such that moisture absorption of the membrane liquid is excellent, and adhesion of the membrane film and pee-off strength to the braid 10 are increased. Further, when coating the membrane film, if the pressure of the membrane liquid is high, there occurs a phenomenon in which the liquid penetrates into the inner surface of the braid to narrow the inner diameter. In this case, since the texture of the inner surface of the braid 10 is dense, the above-described phenomenon does not occur, and thereby enhancing the water permeability and filtration reliability.

Furthermore, since the loop or mow present on the inner surface of the braid 10 is removed, the flow resistance is minimized to increase the flow rate, and the braiding state outside the braid is also regularly aligned.

Therefore, it is possible to reduce a deterioration in the physical properties of the film such as non-uniform braiding state outside the braid or an occurrence of leakage due to uneven coating caused by the loop or mow.

In addition, since the inner surface of the braid 10 is melted and contracted in advance, a contraction rate of the braid 10 is reduced, thereby preventing reductions in the inner diameter and the longitudinal distance due to contraction of the braid 10 caused by the heat before and after coating the membrane.

When the braid of the present invention is actually used, it may be used as a braided tube for coating an electric wire to prevent any short circuit at a connection portion of the electric wire in a case of a typical electric or electronic device.

[Description of Reference Numerals]

| | |
|---|---|
| 100: | Heating core, 110: Heating part |
| 120: | Heater coupling groove, 130: Engaging part |
| 140: | Extension part, 141: Sensor insertion groove |
| 200: | Heater, 210: Heater electric wire |
| 250: | Insulator, 260: Insulation tube |
| 300: | Temperature sensor, 310: Sensor electric wire |

400: Housing, 410: Male screw part
420: Insulator mount groove
500: Heat shield tube, 510: Core engaging jaw
520: Engaging flange,
600: Clamping nut, 610: Core engaging jaw
620: Female screw part
700: Mounting board, 710: Housing fixing part
720: Bracket
800: Temperature controller

**Claims**

1. A device for heat-treating an inner surface of a braid during braiding for reinforcing a hollow fiber membrane for water treatment with a temperature control structure, the device comprising:

   a heating core (100) which includes a heating part (110) having a reduced diameter at an upper end thereof and an engaging part (130) formed at a lower end portion or at a middle portion thereof, and is made of a material of copper or a copper alloy;
   a heater (200) coupled to the heating core (100) to heat the same and receive a power through a heater electric wire (210) coated with a braid;
   a temperature sensor (300) which vertically passes through a center of the heater (200) in a first direction, and comes into contact with an inner lower end of the heating core (100) by an upper end thereof;
   a cylindrical housing (400) through which the heater electric wire (210) and 1 a sensor electric wire (310) pass in the first direction, and includes a male screw part (410) formed on an upper outer circumference thereof, and an insulator mount groove (420) formed in an upper inner portion thereof; and
   a cylindrical heat shield tube (500) extending in the first direction which includes a core engaging jaw (510) bent inward at an upper end thereof to surround the heating core (100) and to be engaged to an upper portion of the engaging part (130), and an engaging flange (520) made of stainless steel, which is formed at a lower end thereof and is bent outward to connect the heating core (100) and the housing (400) with the two being spaced apart from each other;
   a clamping nut (600) which has a shape whose inside is penetrated in the first direction, covers the lower end of the heat shield tube (500) and the upper end of the housing (400), and includes a shield tube engaging jaw (610) formed at an upper end thereof to be engaged to the engaging flange (520) of the heat shield tube (500), and a female screw part (620) formed on a lower inner circumference thereof to be screwed with the male screw part (410) of the housing (400), thereby connecting and fixing the heat shield tube (500) coupled with the heating core (100) and the housing (400) with each other;
   a mounting board (700) which includes a housing fixing part (710) formed at a center thereof in a cylindrical shape, into which a lower portion of the housing (400) is inserted and fixed, and a bracket (720) designed to mount the device on a braiding machine such that the braiding yarns are braided on the outer circumference of the heating core (100), with the bracket (720) protruding from both sides of the housing fixing part (710) in a direction perpendicular to the first direction; and
   a temperature controller (800) which receives the power from an outside, is connected with the heater (200) and the temperature sensor (300) through the heater electric wire (210) and the sensor electric wire (310), and is configured to set a target temperature of the heating core (100), receive a temperature signal of the heating core (100) detected by the temperature sensor (300), and supply or shut off the power to the heater (200) in order to uniformly maintain the temperature of the heating core (100), so as to control an operation of turning on or turning off the heater (200) and a voltage to be supplied to the heater (200).

2. The device according to claim 1, wherein the heating core (100) includes a heater coupling groove (120) formed therein in a shape whose lower end is open, and the engaging part (130) formed around the lower end thereof,
   the heater (200) has an upper end which is inserted into the heater coupling groove (120) from the lower portion of the heater core (100) to come into contact with the heating core (100) and heat the heating core (100), and a lower end which is enclosed by an insulator (250), and is connected with the heater electric wire (210) passing through the insulator (250) to receive the power to generate heat,
   the temperature sensor (300) has an upper end which passes through a center of the heater (200) in the first direction to come into contact with the heater coupling groove (120) of the heating core (100), and a lower end which passes through the insulator (250), and
   the insulator (250) is inserted and mounted into the insulator mount groove (420) of the housing (400).

3. The device according to claim 1, wherein the heating core (100) includes the engaging part (130) formed at the middle portion thereof, and an extension part (140) which has a reduced diameter and extends downward from the engaging part (130), wherein the extension part (140) has a sensor insertion groove

(141) whose lower end is open,
the heater (200) is formed so as to surround the lower extension part of the heating core (100) to heat the heating core (100), and is surrounded by an insulation tube (260) which protrudes downward through inside of the heat shield tube (500), wherein a lower end of the insulation tube (260) is enclosed by an insulator (250) through which the heater electric wire (210) passes,
the temperature sensor (300) has an upper end which is inserted into the sensor insertion groove (141) of the heating core (100) to come into contact with an upper portion of the sensor insertion groove (141), and a lower end which is mounted in the insulator (250) through which the sensor electric wire (310) passes, and
the insulation tube (260) and the insulator (250) are inserted and mounted in the insulator mount groove (420) of the housing (400).

4.  The device according to claim 1, wherein the heating part (110) of the heating core (100) has a chromium plated layer (111) on a surface thereof so as to provide a smooth surface roughness.


**Patentansprüche**

1.  Vorrichtung zum Wärmebehandeln einer inneren Oberfläche eines Geflechts während eines Flechtens zum Verstärken einer Hohlfasermembran zur Wasserbehandlung mit einer Temperatursteuerungsstruktur, wobei die Vorrichtung umfasst:

    einen Heizkern (100), der ein Heizteil (110) mit einem reduzierten Durchmesser an einem oberen Ende von diesem und ein Eingriffsteil (130) umfasst, das an einem unteren Endabschnitt oder an einem mittleren Abschnitt von diesem gebildet ist und aus einem Kupfer- oder einem Kupferlegierungsmaterial besteht;
    eine Heizeinrichtung (200), die mit dem Heizkern (100) gekoppelt ist, um denselben zu erwärmen und eine Leistung durch einen elektrischen Heizdraht (210) zu empfangen, der mit einem Geflecht überzogen ist;
    einen Temperatursensor (300), der vertikal durch ein Zentrum der Heizeinrichtung (200) in einer ersten Richtung hindurchgeht, und durch ein oberes Ende von dieser mit einem inneren unteren Ende des Heizkerns (100) in Kontakt kommt;
    ein zylindrisches Gehäuse (400), durch das der elektrische Heizdraht (210) und ein elektrischer Sensordraht (310) in der ersten Richtung hindurchgehen, und das ein Außengewindeteil (410), das an einem oberen Außenumfang von diesem gebildet ist, und eine Isolatormontagenut (420) umfasst, die in einem oberen Innenabschnitt von diesem gebildet ist; und
ein sich in der ersten Richtung erstreckendes zylindrisches Wärmeabschirmungsrohr (500), das eine Kerneingriffsbacke (510), die an einem oberen Ende von diesem nach innen gebogen ist, um den Heizkern (100) zu umgeben und um in Eingriff mit einem oberen Abschnitt des Eingriffsteils (130) zu sein, und einen aus Edelstahl bestehenden Eingriffsflansch (520) umfasst, der an einem unteren Ende von diesem gebildet und nach außen gebogen ist, um den Heizkern (100) und das Gehäuse (400) mit den beiden zu verbinden, die voneinander beabstandet sind;
eine Klemmmutter (600), die eine Form aufweist, deren Inneres in der ersten Richtung durchdrungen ist, das untere Ende des Wärmeabschirmungsrohrs (500) und das obere Ende des Gehäuses (400) abdeckt, und eine Abschirmungsrohreingriffsbacke (610), die an einem oberen Ende von dieser gebildet ist, um mit dem Eingriffsflansch (520) des Wärmeabschirmungsrohr (500) in Eingriff zu sein, und ein Innengewindeteil (620) umfasst, das an einem unteren Innenumfang von dieser gebildet ist, um mit dem Außengewindeteil (410) des Gehäuses (400) verschraubt zu werden, wodurch sie das mit dem Heizkern (100) gekoppelte Wärmeabschirmungsrohr (500) und das Gehäuse (400) miteinander verbindet und fixiert;
eine Montageplatte (700), die ein Gehäusefixierteil (710), das an einem Zentrum von dieser in einer zylindrischen Form gebildet ist und in das ein unterer Abschnitt des Gehäuses (400) eingefügt und fixiert ist, und eine Halterung (720) umfasst, die dazu ausgelegt ist, die Vorrichtung auf einer Flechtmaschine derart zu montieren, dass die Flechtgarne auf dem Außenumfang des Heizkerns (100) geflochten werden, wobei die Halterung (720) von beiden Seiten des Gehäusefixierteils (710) in einer zu der ersten Richtung senkrechten Richtung vorsteht; und
eine Temperatursteuerungseinrichtung (800), die die Leistung von einer Außenseite empfängt, mit der Heizeinrichtung (200) und dem Temperatursensor (300) durch den elektrischen Heizdraht (210) und den elektrischen Sensordraht (310) verbunden ist, und dazu konfiguriert ist, eine Zieltemperatur des Heizkerns (100) einzustellen, ein durch den Temperatursensor (300) erfasstes Temperatursignal des Heizkerns (100) zu empfangen, und der Heizeinrichtung (200) die Leistung zuzuführen oder abzuschalten, um die Temperatur des Heizkerns (100) gleichmäßig aufrechtzuerhalten, um einen Betrieb eines Einschaltens oder Ausschaltens der Heizeinrichtung (200) und eine der Heizeinrichtung (200) zuzuführende Spannung zu steuern.

**2.** Vorrichtung nach Anspruch 1, wobei der Heizkern (100) eine Heizeinrichtungskopplungsnut (120), die in diesem in einer Form gebildet ist, deren unteres Ende offen ist, und das Eingriffsteil (130) umfasst, das um das untere Ende von diesem gebildet ist,

die Heizeinrichtung (200) ein oberes Ende, das von dem unteren Abschnitt des Heizkerns (100) in die Heizeinrichtungskopplungsnut (120) eingefügt ist, um mit dem Heizkern (100) in Kontakt zu kommen und den Heizkern (100) zu erwärmen, und ein unteres Ende aufweist, das durch einen Isolator (250) umschlossen ist, und mit dem durch den Isolator (250) hindurchgehenden elektrischen Heizdraht (210) verbunden ist, um die Leistung zu empfangen, um Wärme zu erzeugen,
der Temperatursensor (300) ein oberes Ende, das durch ein Zentrum der Heizeinrichtung (200) in der ersten Richtung hindurchgeht, um in Kontakt mit der Heizeinrichtungskopplungsnut (120) des Heizkerns (100) zu kommen, und ein unteres Ende aufweist, das durch den Isolator (250) hindurchgeht, und
der Isolator (250) in die Isolatormontagenut (420) des Gehäuses (400) eingefügt und montiert ist.

**3.** Vorrichtung nach Anspruch 1, wobei der Heizkern (100) das Eingriffsteil (130), das an dem mittlerem Abschnitt von diesem gebildet ist, und

ein Erstreckungsteil (140) umfasst, das einen reduzierten Durchmesser aufweist und sich von dem Eingriffsteil (130) nach unten erstreckt, wobei das Erstreckungsteil (140) eine Sensoreinfügenut (141) aufweist, deren unteres Ende offen ist,
die Heizeinrichtung (200) gebildet ist, um das untere Erstreckungsteil des Heizkerns (100) zu umgeben, um den Heizkern (100) zu erwärmen, und durch ein Isolierrohr (260) umgeben ist, das durch das Innere des Wärmeabschirmungsrohrs (500) nach unten vorsteht, wobei ein unteres Ende des Isolierrohrs (260) durch den Isolator (250) umschlossen ist, durch den der elektrische Heizdraht (210) hindurchgeht,
der Temperatursensor (300) ein oberes Ende, das in die Sensoreinfügenut (141) des Heizkern (100) eingefügt ist, um in Kontakt mit einem oberen Abschnitt der Sensoreinfügenut (141) zu kommen, und ein unteres Ende aufweist, das in dem Isolator (250) montiert ist, durch den der elektrische Sensordraht (310) hindurchgeht, und
das Isolierrohr (260) und der Isolator (250) in die Isolatormontagenut (420) des Gehäuses (400) eingefügt und montiert sind.

**4.** Vorrichtung nach Anspruch 1, wobei das Heizteil (110) des Heizkerns (100) eine chromplattierte Schicht (111) auf einer Oberfläche von diesem aufweist, um eine glatte Oberflächenrauigkeit bereitzustellen.

**Revendications**

**1.** Dispositif de traitement thermique de la surface interne d'une tresse pendant le tressage pour renforcer une membrane à fibres creuses pour le traitement de l'eau avec une structure de régulation de la température, le dispositif comprenant :

un noyau de chauffage (100) qui inclut une pièce chauffante (110) présentant un diamètre réduit au niveau de son extrémité supérieure et une pièce d'engagement (130) formée au niveau d'une partie d'une extrémité inférieure ou d'une partie médiane de celle-ci et est faite d'un matériau de cuivre ou d'un alliage de cuivre,
un élément chauffant (200) couplé au noyau chauffant (100) pour chauffer celui-ci et recevoir du courant à travers un câble électrique de l'élément chauffant (210) revêtu d'un tressage,
un détecteur de température (300) qui traverse verticalement le centre de l'élément chauffant (200) dans une première direction et entre en contact avec une extrémité interne inférieure du noyau chauffant (100) près d'une extrémité supérieure de celui-ci,
un logement cylindrique (400) à travers lequel le câble électrique de l'élément chauffant (210) et un câble électrique de détecteur (310) passent selon la première direction et qui inclut une pièce de filetage mâle (410) formé sur une circonférence externe supérieure de celle-ci et une rainure de montage de l'isolant (420) formée dans une partie interne supérieure de celle-ci et un bouclier thermique tubulaire thermique (500) s'étendant dans la première direction qui inclut une mâchoire engageant le noyau (510) courbée vers l'intérieur au niveau d'une extrémité supérieure de celui-ci pour entourer le noyau chauffant (100) et pour être engagé avec une partie supérieure de la pièce d'engagement (130) et un rebord d'engagement (520) fait d'acier inoxydable qui est formé au niveau d'une extrémité inférieure de celle-ci et est courbé vers l'extérieur pour connecter le noyau chauffant (100) et le logement (400), les deux étant séparés l'un de l'autre,
un écrou de blocage (600) qui a une forme dont l'intérieur est pénétré dans la première direction, couvre l'extrémité inférieure du bouclier thermique tubulaire (500) et l'extrémité supérieure du logement (400) et inclut une mâchoire engageant un bouclier tubulaire (610) formé au niveau d'une extrémité supérieure de celui-ci pour être engagé avec le rebord d'engagement (520) du bouclier thermique tubulaire (500) et une pièce de filetage femelle (620) formée sur une circonférence interne inférieure de celui-ci pour être vissée avec la pièce de filetage mâle (410) du logement (400), connectant ainsi et fixant le bouclier thermique tubulaire (500) couplé avec le noyau chauffant (100) et le logement (400) l'un avec l'autre,

un plateau de montage (700) qui inclut une pièce de fixation de l'étui (710) formée au niveau d'un centre de celle-ci avec une forme cylindrique, dans laquelle une partie inférieure du logement (400) est insérée et fixée, et un support (720) conçu pour monter le dispositif sur une machine de tressage de manière à ce que les fils de tressage soient tressés sur la circonférence externe du noyau chauffant (100) avec le support (720) dépassant des deux côtés de la pièce de fixation de l'étui (710) dans une direction perpendiculaire à la première direction et

un contrôleur de température (800) qui reçoit le courant depuis l'extérieur est connecté avec l'élément chauffant (200) et le détecteur de température (300) à travers le câble électrique de l'élément chauffant (210) et le câble électrique du détecteur (310) et est configuré pour régler une température cible du noyau chauffant (100), recevoir un signal de température du noyau chauffant (100) détecté par le détecteur de température (300) et fournir ou couper le courant à l'élément chauffant (200) afin de maintenir uniformément la température du noyau chauffant (100), de manière à contrôler une opération d'allumer ou d'éteindre l'élément chauffant (200) et une tension à fournir à l'élément chauffant (200).

2. Dispositif selon la revendication 1, **caractérisé en ce que** le noyau chauffant (100) inclut une rainure de couplage de l'élément chauffant (120) formée à l'intérieur dans une forme dont l'extrémité inférieur est ouverte et la pièce d'engagement (130) formée autour de l'extrémité inférieure de celle-ci, l'élément chauffant (200) présente une extrémité supérieure qui est insérée dans la rainure de couplage de l'élément chauffant (120) à partir de la partie inférieure du noyau chauffant (100) pour entrer en contact avec le noyau chauffant (100) et chauffer le noyau chauffant (100), et une extrémité inférieure qui est enclose par un isolant (250) et est connectée avec le câble électrique de l'élément chauffant (210) passant à travers l'isolant (250) pour recevoir le courant pour générer de la chaleur,

le détecteur de température (300) présente une extrémité supérieure qui passe à travers un centre de l'élément chauffant (200) dans la première direction pour entrer en contact avec la rainure de couplage de l'élément chauffant (120) du noyau chauffant (100) et une extrémité inférieure qui passe à travers l'isolant (250) et

l'isolant (250) est inséré et monté dans la rainure de montage de l'isolant (420) du logement (400).

3. Dispositif selon la revendication 1, **caractérisé en ce que** le noyau chauffant (100) inclut la pièce d'engagement (130) formée au niveau de la partie médiane de celui-ci et une pièce d'extension (140) qui a un diamètre réduit et s'étend vers le bas à partir de la pièce d'engagement (130), où la pièce d'extension (140) présente une rainure d'insertion du détecteur (141) dont l'extrémité inférieure est ouverte, l'élément chauffant (200) est formé de façon à entourer la pièce d'extension inférieure du noyau de chauffage (100) pour chauffer le noyau chauffant (100), et est entouré par un tube d'isolation (260) qui dépasse vers le bas à travers l'intérieur du bouclier thermique tubulaire (500), où une extrémité inférieure du tube d'isolation (260) est enclose dans un isolant (250) à travers lequel le câble électrique de l'élément chauffant (210) passe,

le détecteur de température (300) a une extrémité supérieure qui est insérée dans la rainure d'insertion du détecteur (141) du noyau chauffant (100) pour entrer en contact avec une partie supérieure de la rainure d'insertion du détecteur (141), et une extrémité inférieure qui est montée dans l'isolant (250) à travers laquelle le câble électrique du détecteur (310) passe et

le tube isolant (260) et l'isolant (250) sont insérés et montés dans la rainure de montage de l'isolant (420) du logement (400).

4. Dispositif selon la revendication 1, **caractérisé en ce que** la pièce de chauffage (110) du noyau chauffant (100) présente une couche plaquée chrome (111) sur une surface de celle-ci afin d'apporter de la rugosité à une surface lisse.

FIG. 1

FIG. 2

FIG. 3

FIG. 4

FIG. 5

FIG. 6

10

FIG. 7

(a)

(b)

FIG. 8

(a)

(b)

(c)

(d)

(e)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101634050
- KR 200311089
- KR 200193461